# EUROPEAN PATENT APPLICATION

(11) **EP 2 390 765 A1**
(43) Date of publication of application: **30.11.2011**
(21) Application number: 10164173.6
(22) Date of filing: 27.05.2010
(51) Int. Cl.: G06F 3/041, G06F 3/01

(54) **Touch-sensitive display**

(71) Applicant: RESEARCH IN MOTION LIMITED, Waterloo, Ontario N2L 3W8 (CA)
(72) Inventor: Pemberton-Pigott, Nigel Patrick, Waterloo Ontario N2L 3W8 (CA)
(74) Representative: Roberts, Gwilym Vaughan

(57) **Abstract**

An electronic device is described comprising a touch-sensitive display movable, relative to a base, between a first position and a second position. The electronic device includes a deflector that moves the touch-sensitive display at least laterally to the second position when the touch sensitive display is depressed.

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging, and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in devices with touch-sensitive displays are desirable.

### Summary

An electronic device is described comprising a touch-sensitive display movable, relative to a base, between a first position and a second position. The electronic device includes a deflector that moves the touch-sensitive display at least laterally to the second position when the touch sensitive display is depressed.

FIG. 1 is a block diagram of a portable electronic device in accordance with the disclosure.

FIG. 2 is a front view of the portable electronic device having a touch-sensitive display in accordance with the disclosure.

FIG. 3 is a perspective view of the portable electronic device without the touch-sensitive display in accordance with the disclosure.

FIG. 4 and FIG. 5 are partial section views, along line 4-4 of FIG. 3, of the portable electronic device including the touch-sensitive display in accordance with the disclosure.

FIG. 6 is a section view of a deflector disposed with respect to the touch-sensitive display in accordance with the disclosure.

FIG. 7 is a section view of an engagement member engaged disposed with respect to a touch-sensitive display in accordance with the disclosure.

FIG. 8 is a section view of an alternative deflector disposed with respect to a touch-sensitive display in accordance with the disclosure.

### Detailed Description

A portable electronic device is described comprising a touch-sensitive display associated with a housing and moveable relative to the housing between a first position and a second position. A deflector is located between the housing and the touch-sensitive display such that when the touch-sensitive display is in the first position depressing the touch-sensitive display moves the touch-sensitive display laterally to the second position.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

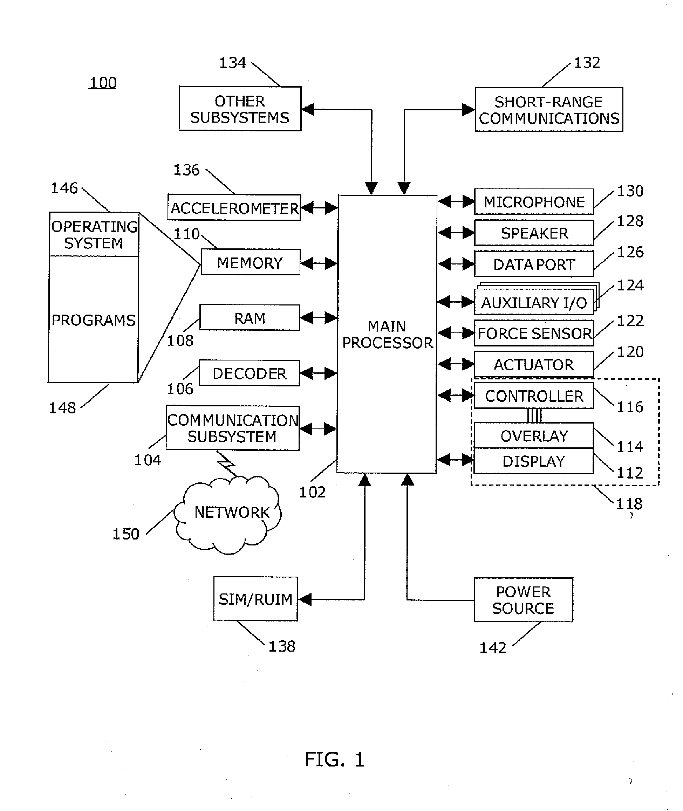

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback. When force is applied, the touch-sensitive display 118 is depressible, pivotable, and/or movable. The actuator may be any suitable actuator, including mechanical and/or electrical actuators.

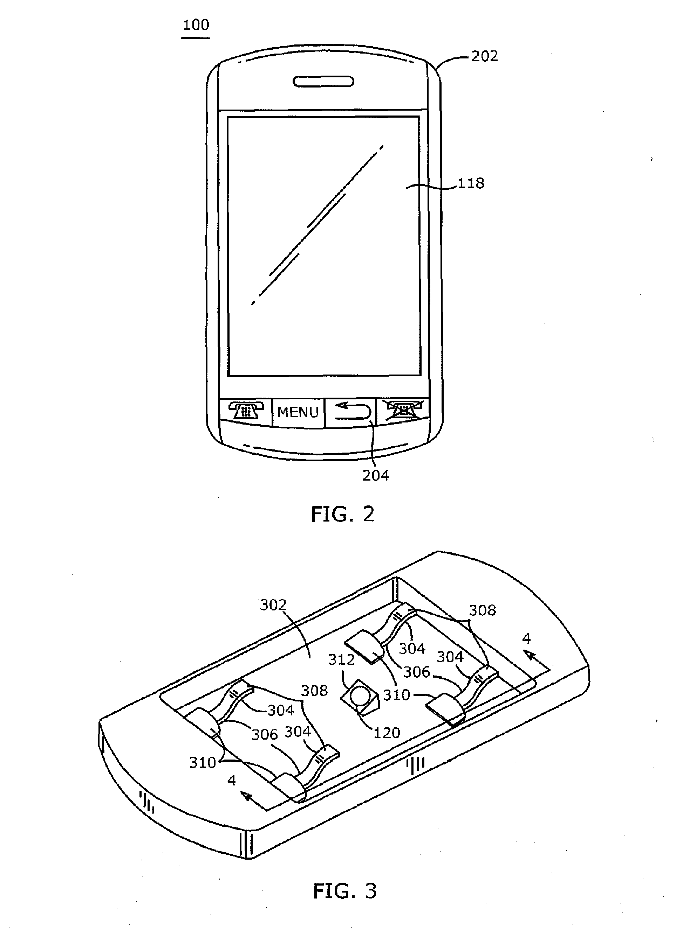

A front view of the example portable electronic device 100 is shown in FIG. 2. The portable electronic device 100 includes a housing 202 that supports the touch-sensitive display 118 shown incorporated into the example portable electronic device 100 and one or more mechanical or virtual buttons 204. The touch-sensitive display 118 described is operatively coupled to the housing 202 such that the touch-sensitive display 118 can be depressed and moved relative to the housing 202 during use.

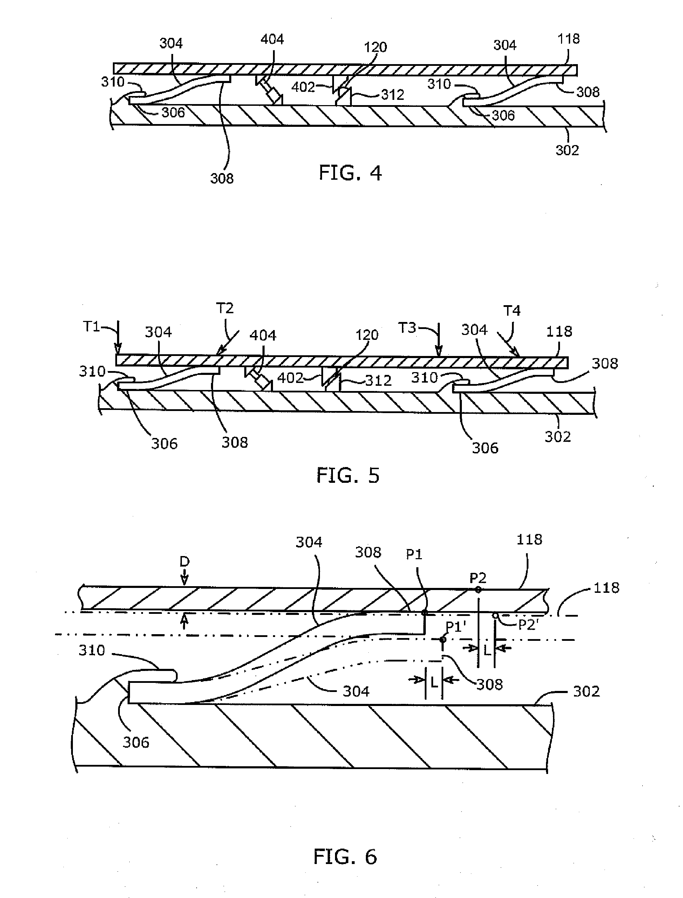

The portable electronic device 100 is shown in FIG. 3 without the touch-sensitive display 118. A base 302 associated with the housing 202 is generally rectangular and includes a plurality of deflectors 304 located near corners of the base 302. The base 302 may be a printed circuit board, substrate, or part of the housing 202. The base 302 is operatively coupled to the housing 202 when not a part of the housing 202. Other components, e.g., the processor 102, may be disposed on the base 302. The deflectors 304 are shown operatively engaged with the base 302 and the touch-sensitive display 118. In FIG. 4 through FIG. 6, the deflectors 304 are shown configured such that depressing the touch-sensitive display 118, e.g., moving the touch-sensitive display 118 from a first position in FIG. 4 to a second position in FIG. 5 results in the touch-sensitive display 118 moving bidirectionally along a generally non-linear or curved path both toward the base 302 and laterally or parallel to the base 302, e.g., left to right from the perspective of the drawing. The touch-sensitive display 118 may optionally move in a linear path between the two positions. Thus, the deflectors 304 direct the movement of the touch-sensitive display 118 between the first position and the second position.

In the example portable electronic device 100, the deflectors 304 are generally resilient rectangular strips in the form of flat springs that are contoured, for example, by bending, forming, and the like. The deflectors 304 direct the inward and lateral movement of the touch-sensitive display 118 when the touch-sensitive display 118 is depressed, and may provide resistance to depressing the touch-sensitive display 118. While four deflectors 304 are shown, any number of deflectors 304 may be used depending upon the specifics of each application. The deflectors 304 may be made from metal, such as spring steel, molded from a resilient plastic, or produced of some other resilient material, such as rubber, suitable for repeatedly directing the curved, bidirectional movement of the touch-sensitive display 118. Moreover, the deflectors 304 may be comprised of multiple segments or distinct components, for example a hinged linkage, and may take on a variety of geometric cross-sections, such as circular, provided the deflectors 304 adequately direct the bidirectional movement of the touch-sensitive display 118. The deflectors 304 may be comprised of other shapes than rectangular strips.

Each deflector 304 comprises a first end 306 coupled to the base 302 and a second end 308 coupled to the touch-sensitive display 118. In one example, the first end 306 of the deflector 304 is disposed in a mount 310, e.g., formed integrally with the base 302 and couples the first end 306 to the base 302, as shown in FIG. 4. An adhesive or other material may be utilized in addition to the mount 310 to aid the coupling of the first end 306 within the pocket 310. The second end 308 is coupled to the touch-sensitive display 118, e.g., with a suitable adhesive or via friction, such as may be provided by a rubber material disposed on the second end 308. A variety of different techniques may be utilized to couple the deflector 304 to the touch-sensitive display 118 and the base 302, such as ultrasonic welding, fasteners, integral forming, and so forth.

During use, one or more deflectors 304 move or flex from a first, relaxed position in FIG. 4 to a second, loaded position in FIG. 5. Optionally, the deflectors may not flex, for example, when the deflectors comprise rigid members coupled by hinges. As the touch-sensitive display 118 is depressed, the deflector 304 flexes and the second end 308 of the deflector 304 and the coupled touch-sensitive display 118 moves laterally and toward the base 302 along a generally non-linear or curved path, as shown in FIG. 6. For example, a point P1 near the second end 308 of the deflector 304 and point P2 on the touch-sensitive display 118 move bidirectionally to points P1' and P2', respectively, as the touch-sensitive display 118 is depressed a distance D and moved laterally a distance L, shown exaggerated in FIG. 6 for clarity. The lateral distance L may be less or more than the depressed distance D, such that the lateral movement of the touch-sensitive display 118 is less or more perceivable, respectively, than the vertical movement. Although the examples shown and described herein illustrate one direction of lateral movement, the lateral movement may be in either one or both of the x direction and y direction from the perspective of the front view of FIG. 2.

In the example portable electronic device 100, the actuator 120 is disposed on the base 302, and may optionally be disposed on a support 312 located on the base 302. The actuator 120 may be a dome-type electro-mechanical switch that provides tactile feedback when the dome collapses due to force imparted on the touch-sensitive display 118 to move the touch-sensitive display 118 from a first position to a second position and when the dome returns to the rest position after release of the switch. Alternatively, other types of actuators 120 may be utilized such as an electrical contact, a micro-switch, a piezoelectric sensor, or any other type of electrical or mechanical sensor/switch. When an electro-mechanical switch is utilized to provide tactile feedback, the provision of tactile feedback and signal to the processor 102 are triggered by a single depression of the touch-sensitive display 118. As shown in FIG. 4, a engagement member 402 disposed on the touch-sensitive display 118 and spaced laterally from the actuator 120 is configured to engage the actuator 120 when the touch-sensitive display 118 is moved from the first position to the second position, wherein the touch-sensitive display 118 is depressed and laterally-shifted. The actuator 120 and the engagement member 402 may be disposed on either the touch-sensitive display 118 or the base 302, e.g., the actuator 120/support 312 may be disposed on the touch-sensitive display 118 and the engagement member 402 disposed on the base 302.

According to another example, the actuator 120 may comprise multiple piezoelectric switches, one located in each corner of the rear housing 302. Multiple engagement members may be configured to trigger the respective piezoelectric devices as the touch-sensitive display 118 reaches the second position.

When the touch-sensitive display 118 is depressed, the engagement member 402 and the actuator 120 meet along an engagement plane 702 oriented at an angle θ that is approximately between forty-five and sixty degrees relative to the touch-sensitive display 118. The movement between the engagement member 402 and the actuator 120 triggers the actuator 120 when the touch-sensitive display 118 moves enough of a distance. The deflectors 304 may provide a generally uniform touch resistance as the touch-sensitive display 118. More touch resistance is provided as the actuator 120 is engaged and triggered. The actuator 120 may optionally not be included, and the engagement member 402 may engage with the support 312 when the touch-sensitive display 118 is in the second position.

Arrows T1 through T4 in FIG. 5 illustrate different angles and locations of touches on the touch-sensitive display. The normal force that depresses the touch-sensitive display 118 and triggers the actuator 120 is substantially uniform regardless of the location of the touch on the touch-sensitive display 118.

The foregoing described an example in which an actuator 120 provides tactile feedback via a dome switch. Other types of switch may be utilized that do not provide tactile feedback. To provide tactile feedback, a tactile actuator 404, such as shown in FIG. 4 and FIG. 5, may be operatively coupled to the base 302 and the touch-sensitive display 118. The tactile actuator 404 may provide tactile feedback by controlling the movement of the touch-sensitive display 118 between the first position and the second position. The tactile actuator 404 may also be skewed relative to the touch-sensitive display 118, such that the general movement of the deflector 304 actuates or activates the tactile actuator 404. A variety of tactile actuators may be used including, for example, electromechanical actuators.

The tactile actuator 404 may comprise one or more piezoelectric (piezo) devices or stacked piezo devices that may be combined with other devices that provide tactile feedback for the touch-sensitive display 118. Contraction of the piezo actuator(s) applies a spring-like force, for example, opposing a force externally applied to the touch-sensitive display 118. Each piezo actuator includes a piezo device, such as a piezoelectric ceramic disk adhered to a substrate such as a metal substrate. The substrate bends when the piezo device contracts due to build-up of voltage/charge at the piezo device or in response to a force, such as an external force applied to the touch-sensitive display 118. The voltage/charge may be adjusted by varying the applied voltage or current, thereby controlling the shape and size of the piezo devices and the forces applied by the tactile actuator 404. The voltage/charge on the piezo actuator may be reduced or removed, for example, by a controlled discharge of current that causes the piezo device to expand or contract, thereby varying the force applied by the piezo devices. The voltage/charge may advantageously be changed over a relatively short period of time to provide tactile feedback to the user. Absent an external force and absent a charge on the piezo device, the piezo device may be slightly bent due to a mechanical preload

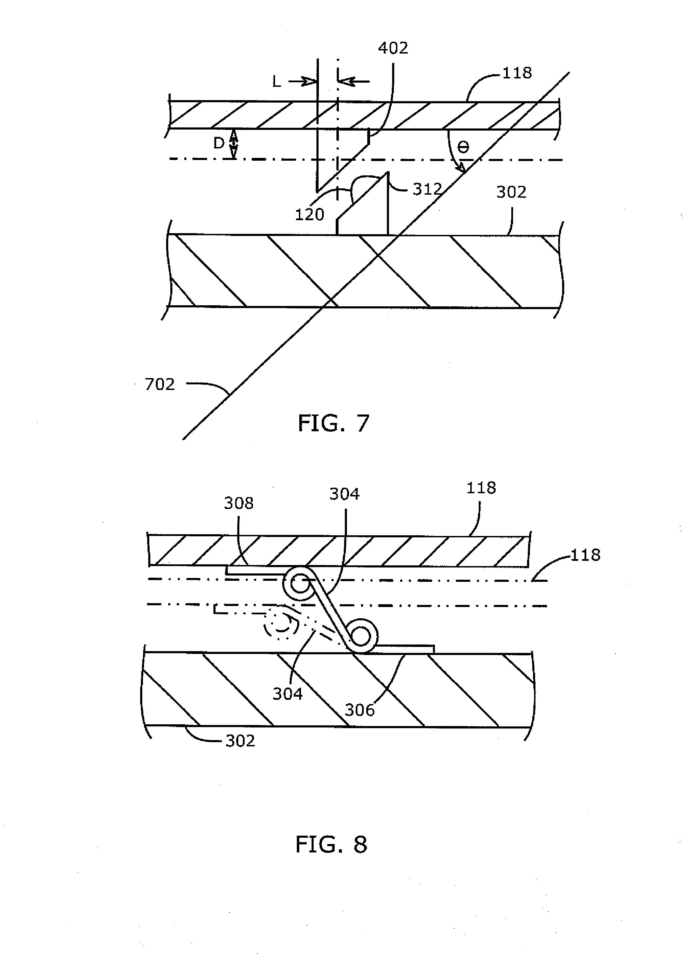

The deflectors 304 are generally shown in the form of a flat spring in FIG. 6. The deflectors 304 may take on a variety of other shapes, devices, and/or configurations. For example, the deflector 304 may comprise a spring, such as a torsion spring, e.g., a helical torsion spring, including a pair of coils in series and having a first end 806 coupled to the base 302 and a second end 808 coupled to the touch-sensitive display 118, as shown in FIG. 8. In addition, any combination and arrangement of deflectors 304 may be incorporated into the portable electronic device 100. For instance, a pair of torsion spring type deflectors 304 may be located next to the actuator 120 in addition to the four flat spring type deflectors 304 shown in FIG. 3.

The example embodiments described provide several advantages. The example embodiments provide increased sensitivity to touches at the edges of the touch-sensitive display. Additionally, uniform response to a touch is provided at any location the display. Thus, the examples described herein enhance a user's tactile experience.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device comprising:
a touch-sensitive display moveable, relative to a base, between a first position and
a second position;
a deflector that moves the touch-sensitive display at least laterally to the second position when the touch-sensitive display is depressed.

2. The electronic device of claim 1, further comprising an electro-mechanical switch that is actuated when the touch-sensitive display reaches the second position.

3. The electronic device of claim 2, wherein the switch comprises a dome switch.

4. The electronic device of claim 2, wherein:
the switch is disposed on at least one of the housing and the touch-sensitive display;
an engagement member actuates the switch when the touch-sensitive display reaches the second position.

5. The electronic device of claim 4, wherein the switch is oriented at approximately between forty-five degrees and sixty degrees relative to the touch-sensitive display.

6. The electronic device of claim 1, comprising a plurality of deflectors.

7. The electronic device of claim 1, wherein the deflector comprises a spring.

8. The electronic device of claim 7, wherein the spring comprises a first end coupled to the housing and a second end coupled to the touch-sensitive display.

9. The electronic device of claim 1, wherein the deflector is coupled to the housing with a mount.

10. The electronic device of claim 1, further comprising a tactile actuator operationally coupled to the touch-sensitive display and the housing to provide tactile feedback by selectively controlling movement of the touch-sensitive display between the first position and the second position.

11. The electronic device of claim 1, wherein, as the touch-sensitive display moves from the first position toward the second position, the touch-sensitive display moves along a non-linear path.

12. The electronic device of claim 1, wherein the base comprises a printed circuit board.

13. A method comprising:
in response to a force imparted on a touch-sensitive display, moving a touch-sensitive display from a first location to a second location, wherein the second location is displaced from the first location at least laterally;
when the touch-sensitive display reaches the second position, actuating a switch disposed in conjunction with the touch-sensitive display.

14. The method of claim 13, wherein a deflector directs the touch-sensitive display along a non-linear path between the first position and the second position.

## Amended claims

### Amended claims in accordance with Rule 137(2) EPC.

**1.** An electronic device (100) comprising:
a touch-sensitive display (118) moveable, relative to a base, between a first position and a second position;
a deflector (304) that moves the touch-sensitive display at least laterally to the second position when the touch-sensitive display is depressed.

**2.** The electronic device of claim 1, further comprising an electromechanical switch (120) that is actuated when the touch-sensitive display (118) reaches the second position.

**3.** The electronic device of claim 2, wherein the switch (120) comprises a dome switch.

**4.** The electronic device of claim 2, wherein:
the switch (120) is disposed on at least one of the housing and the touch-sensitive display (118);
an engagement member (402) actuates the switch when the touch-sensitive display reaches the second position.

**5.** The electronic device of claim 4, wherein the switch (120) is oriented at approximately between forty-five degrees and sixty degrees relative to the touch-sensitive display (118).

**6.** The electronic device of claim 1, comprising a plurality of deflectors (304) providing a generally uniform touch resistance at locations on the display.

**7.** The electronic device of claim 1, wherein the deflector (304) comprises a spring.

**8.** The electronic device of claim 7, wherein the spring comprises a first end coupled to the housing and a second end coupled to the touch-sensitive display.

**9.** The electronic device of claim 1, wherein the deflector (304) is coupled to the housing with a mount (310).

**10.** The electronic device of claim 1, further comprising a tactile actuator (404) operationally coupled to the touch-sensitive display (118) and the housing to provide tactile feedback by selectively controlling movement of the touch-sensitive display between the first position and the second position.

**11.** The electronic device of claim 1, wherein, as the touch-sensitive display (118) moves from the first position toward the second position, the touch-sensitive display moves along a non-linear path.

**12.** The electronic device of claim 1, wherein the base comprises a printed circuit board.

**13.** A method comprising:
in response to a force imparted on a touch-sensitive display (118), moving a touch-sensitive display from a first location to a second location, wherein the second location is displaced from the first location at least laterally;
when the touch-sensitive display reaches the second position, actuating a switch disposed in conjunction with the touch-sensitive display.

**14.** The method of claim 13, wherein a deflector (304) directs the touch-sensitive display (118) along a non-linear path between the first position and the second position.
